(19) Europäisches Patentamt
European Patent Office
Office européen des brevets

(11) **EP 4 028 951 B1**

(12) **EUROPEAN PATENT SPECIFICATION**

(45) Date of publication and mention
of the grant of the patent:
**08.04.2026 Bulletin 2026/15**

(21) Application number: **19769126.4**

(22) Date of filing: **12.09.2019**

(51) International Patent Classification (IPC):
**G06N 3/088** *(2023.01)* **G06N 3/09** *(2023.01)*
**G06N 3/045** *(2023.01)* **G06N 3/0464** *(2023.01)*

(52) Cooperative Patent Classification (CPC):
**G06N 3/088; G06N 3/045; G06N 3/0464; G06N 3/09**

(86) International application number:
**PCT/EP2019/074323**

(87) International publication number:
**WO 2021/047776 (18.03.2021 Gazette 2021/11)**

(54) **DETECTION ALGORITHM**

DETEKTIONSALGORITHMUS

ALGORITHME DE DÉTECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.07.2022 Bulletin 2022/29**

(73) Proprietor: **Nokia Technologies Oy
02610 Espoo (FI)**

(72) Inventors:
• **HOYDIS, Jakob
75014 Paris (FR)**
• **AIT AOUDIA, Faycal
92210 Saint Cloud (FR)**

(74) Representative: **Nokia EPO representatives
Nokia Technologies Oy
Karakaari 7
02610 Espoo (FI)**

(56) References cited:
**WO-A1-2019/029802**

• **BAGADI KALA PRAVEEN ET AL: "Recent trends
in multiuser detection techniques for SDMA-
OFDM communication system", PHYSICAL
COMMUNICATION, vol. 20, 27 July 2016
(2016-07-27), pages 93 - 108, XP029706202, ISSN:
1874-4907, DOI: 10.1016/J.PHYCOM.2016.07.001**

## Description

### Field

The present specification relates to detection algorithms, such as multiple-input multiple-output (MIMO) detection algorithms.

### Background

Detection algorithms, such as multiple-input multiple-output (MIMO) detection algorithms, having trainable parameters are known. However, there remains scope for further developments in this area.

"Recent trends in multiuser detection techniques for SDMA-OFDM communication system", Bagadi Laka Praveen et. al., Physical Communication, Vol. 20, 27 July 2016 describes a space division multiple access-orthogonal frequency division multiplexing (SDMA-OFDM) in which neural network-based receivers are used.

WO 2019/029802 describes a system and method for antenna beam selection in a radio access network. The system comprises a measurement module that obtains channel quality measurements of a plurality of beams usable to serve a user equipment. A training module generates a machine learning model based on the channel quality measurements. A prediction module selects, based on the machine learning model, one of a plurality of beams used to serve the user equipment.

### Summary

The invention is defined by the appended claims.

### Brief description of the drawings

Example embodiments will now be described, by way of non-limiting examples, with reference to the following schematic drawings, in which:

   FIG. 1 is a block diagram of an example end-to-end communication system;
   FIG. 2 is a representation of a modulation scheme used in example embodiments;
   FIG. 3 is a flow chart showing an example algorithm;
   FIGS. 4 and 5 are block diagrams of system in accordance with example embodiments;
   FIG. 6 is a flow chart showing an algorithm in accordance with an example embodiment;
   FIG. 7 is a block diagram of a system in accordance with an example embodiment;
   FIGS. 8 to 10 are flow charts showing algorithms in accordance with example embodiments;
   FIG. 11 shows an example neural network that may be used in example embodiments;
   FIG. 12 is a block diagram of a components of a system in accordance with an exemplary embodiment; and
   FIGS. 13A and 13B show tangible media, respectively a removable memory unit and a compact disc (CD) storing computer-readable code which when run by a computer perform operations according to embodiments.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

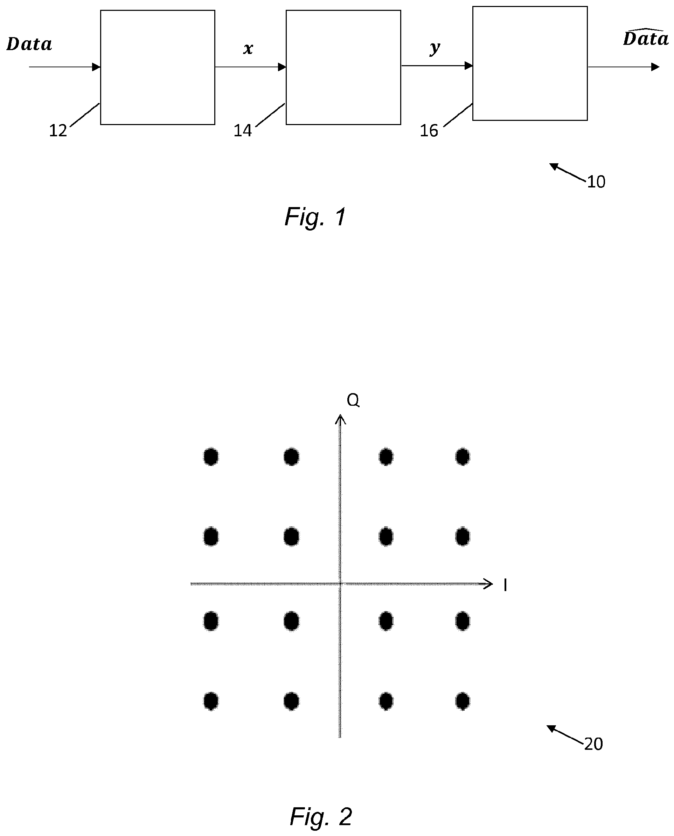

FIG. 1 is a block diagram of an example end-to-end communication system, indicated generally by the reference numeral 10. The system 10 includes a transmitter 12, a channel 14 and a receiver 16. Viewed at a system level, the system 10 converts data received at the input to the transmitter 12 into transmit symbols (x) for transmission over the channel 14 and the receiver 16 generates an estimate of the transmitted data ( $\widehat{data}$ ) from symbols ($y$) received from the channel 14.

The transmitter 12 may include a modulator that converts the data symbols into the transmit symbols (x) in accordance with a modulation scheme. The transmit symbols are then transmitted over the channel 14 and received at the receiver 16 as received symbols ($y$). The receiver may include a demodulator that converts the received symbols ($y$) into the estimate of the originally transmitted data symbols.

A number of modulation techniques could be used in the implementation of the transmitter 12 and the receiver 16. These include amplitude shift keying (ASK) in which the amplitude of a carrier signal is modified based on a signal being transmitted and phase shift keying (PSK) in which the phase of a carrier signal is modified based on a signal being transmitted. By way of example, quadrature phase shift keying (QPSK) is a form of phase shift keying in which two bits are modulated at once, selecting one of four possible carrier phases shifts (e.g. 0, +90 degree, 180 degrees, -90 degrees). Such carrier phase and amplitudes are often represented as constellation positions in a complex plane.

FIG. 2 is a representation, indicated generally by the reference numeral 20, of a quadrature amplitude modulation (QAM) scheme used in example embodiments. The QAM representation 20 includes 16 points, plotted on in-phase (I) and quadrature (Q) axes. Thus, in the example representation 20, 16 symbols can be modulated in different ways by a modulator (which may form part of the transmitter 12 described above). The skilled person will be aware of many other suitable modulation techniques.

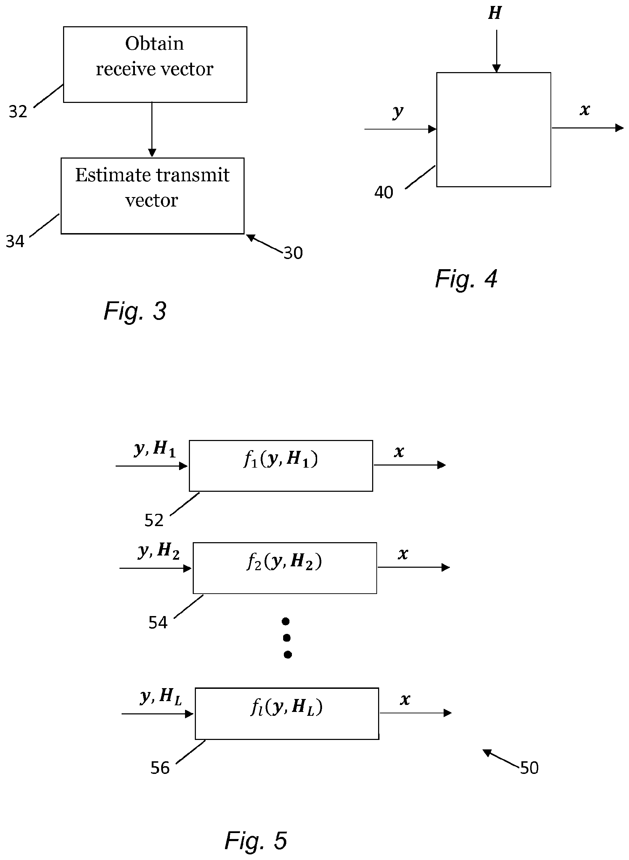

FIG. 3 is a flow chart showing an algorithm, indicated generally by the reference numeral 30. The algorithm 30 starts at operation 32 where a receive vector is obtained. At operation 34, a transmit vector is estimated.

FIG. 4 is a block diagram of system, indicated generally by the reference numeral 40, in accordance with an example embodiment. The system 40 may implement the algorithm 30 described above.

As discussed in detail below, the system 40 receives a channel matrix $H$ and a receive vector $y$ (thereby implementing operation 32 of the algorithm 30) and generates an estimate of the transmit vector $x$ (thereby implementing operation 34 of the algorithm 30). In the context of MIMO, the system 40 may be a MIMO detector that seeks to recover the vector of transmitted symbols $x \in \mathbb{Q}^K$, where $\mathbb{Q}$ is the constellation such as QAM, from the observation $y \in \mathbb{C}^M$, given as

$$y = Hx + w$$

where $H \in \mathbb{C}^{M \times K}$ is the channel matrix, assumed to be known at the receiver, and $w \in \mathbb{C}^M$ is a vector of receiver noise. The best detector is the maximum likelihood (ML) detector solving $\widehat{x}_{ML} = \arg \min_{\widehat{x} \in \mathbb{Q}^K} \|y - H\widehat{x}\|$. However, solving such an equation is not generally practical.

One implementation option is to use machine-learning principles to train the system 40. For example, a machine learning-based MIMO detection algorithm may train the system 40 using a large dataset consisting of the tuples $\{(y_i, H_i), x_i\}$ for $i = 1 \dots, N$, where $(y_i, H_i)$ is the input to the algorithm and $x_i$ is the targeted output (label) for example $i$. This means that a single algorithm may be used to perform detection for any possible realization of the channel matrix $H$. However, this approach tends to lead to trainable algorithms that tend to be very complex or deliver unsatisfactory performance when the distribution of the channel matrices is very rich, as can be expected in a real-world deployment.

FIG. 5 is a block diagram of system, indicated generally by the reference numeral 50, in accordance with an example embodiment. As discussed further below, the system 50 provides a detection algorithm (such as a MIMO detection algorithm) with trainable parameters $\theta$ (e.g., the weights of a neural network). However, unlike the system 40 described above, $L$ different versions of this algorithm are trained on different parts of the dataset, resulting in $L$ different sets of trainable parameters $\theta_l$, $l = 1 \dots, L$. Thus, the system 50 comprises a first detection algorithm 52, a second detection algorithm 54 and an L-th detection algorithm 56. Thus, the plurality of detection algorithms 52 to 56 may comprise a plurality of versions of a detection algorithm, each having a different set of parameters.

The dataset for training the system 50 is partitioned into L parts by clustering the corresponding channel matrices $H_i$ into $L$ clusters according to some metric (such as a distance metric), as discussed further below. Thus, each of the different versions of the algorithm is optimized for a different sub-set of channel realizations. This makes the detection task easier, so that the performance is improved, and the detection algorithm can be made less complex.

In the system 50, the first detection algorithm 52 is trained to provide a function $f_1(y, H_1)$ and is trained using the data corresponding to the channel matrices $H_1$. Similarly, the second detection algorithm 54 is trained to provide a function $f_2(y, H_2)$ and is trained using the data corresponding to the channel matrices $H_2$ and the L-th detection algorithm 56 is trained to provide a function $f_L(y, H_L)$ and is trained using the data corresponding to the channel matrices $H_L$.

At runtime, upon estimating a channel matrix $H$, the best set of parameters $\theta$ to configure the detection algorithm is selected by finding the cluster to which $H$ it belongs.

Thus, if suitable clustering can be implemented, a detection algorithm $f_\theta(y, H)$ can be generated that is parametrized by the parameter vector $\theta$. The output of the algorithm is either a valid vector of transmitted symbols $\widehat{x} \in \mathbb{Q}^K$ or a probability distribution $p(\widehat{x}|y, H)$ from which a hard decision can be obtained according to $\widehat{x} = \arg \max_{\widehat{x} \in \mathbb{Q}^K} p(\widehat{x}|y, H)$.

The system 50 seeks to optimize the parameter vector $\theta$ for $L > 1$ different classes of channel matrices $H$. Thus, rather than optimizing $\theta$ so that the detection algorithm works well for all channel matrices (as described above with reference to FIGS. 3 and 4), the detection problem can be made simpler by restricting the optimization to a sub-set of all possible channel matrices (as described with reference to FIG. 5). This approach can lead to both better performance and reduced complexity.

As discussed further below, an implementation of the system 50 includes:

- A clustering algorithm that allows us to determine to which out of $L$ classes a channel matrix $H$ belongs.
- A training algorithm that provides us with $L$ different parameter vectors $\theta_l$, $l = 1 \dots, L$.

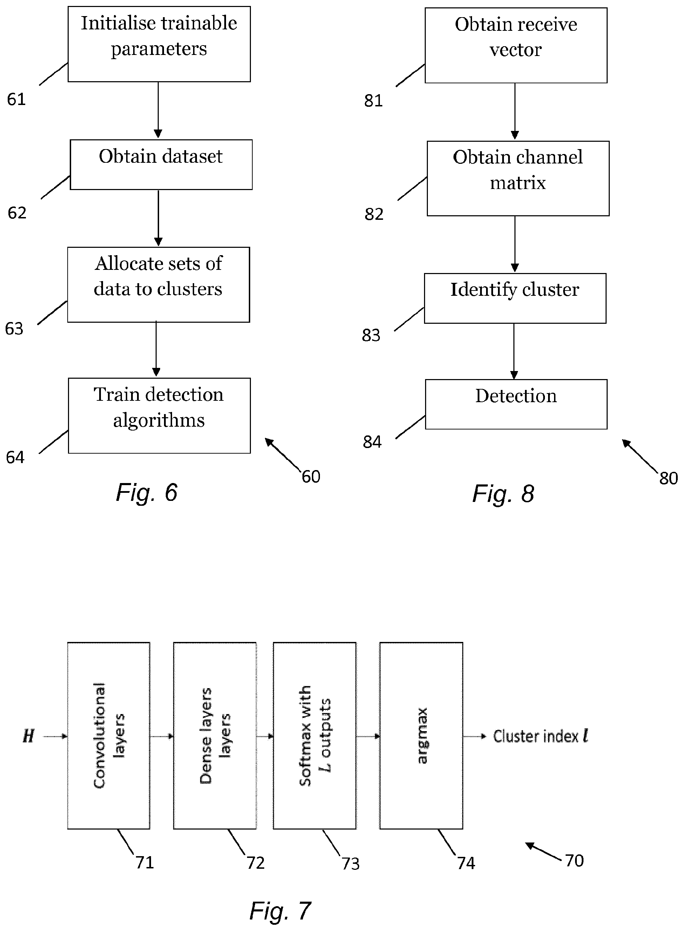

FIG. 6 is a flow chart showing an algorithm, indicated generally by the reference numeral 60, in accordance with an example embodiment. The algorithm 60 is an example algorithm by which the system 50 may be trained.

The algorithm 60 starts at operation 61, where trainable parameters for the algorithm 60 are initialised (for example, in accordance with a random or an arbitrary initialisation). A plurality of sets of trainable parameters may be initialised, with one set of trainable parameters being initialised for each of a plurality of detection algorithms (such as the algorithms 52, 54 and 56 of the system 50).

At operation 62, a dataset is obtained (e.g. by receiving, collating, retrieving or other obtaining such a dataset) for training the system 50. The dataset comprises a plurality of sets of data, each set of data comprising a transmit vector, a receive vector and a channel matrix describing a channel. As described above, the receive vector (**y**) may be given by **y=Hx+w,** where **H** is the channel matrix and **w** is noise. The transmit vectors may be constellation points of a transmission scheme (such as QAM).

At operation 63, each of the sets of data obtained in operation 62 is allocated to one of a plurality of clusters based on the channel matrix of the respective set of data. Each cluster may be associated with one of said detection algorithms 52, 54 and 56 of the system 50, wherein the allocation is performed according to a clustering algorithm. The operation 63 may include setting or defining how many clusters are to be used in a particular example implementation.

A number of clustering algorithms are known and may be used in an implementation of the operation 63. One option is the widely known K-Means algorithm, but other options (such as a random forest algorithm) may be used and suitable options will be apparent to those of ordinary skill in the art.

A first step of an example K-Means algorithm is to define a distance metric $d(\boldsymbol{A}, \boldsymbol{B})$ between two matrices $\boldsymbol{A}$ and $\boldsymbol{B}$ and to compute the mean value of multiple matrices. For example, one can use the chordal distance $d_C(\boldsymbol{A}, \boldsymbol{B}) = \|\boldsymbol{A}\boldsymbol{A}^H - \boldsymbol{B}\boldsymbol{B}^H\|_F^2$ between two matrices and define the mean of $M$ (tall) unitary matrices $\boldsymbol{U}_1, \ldots, \boldsymbol{U}_M$ as $\overline{\boldsymbol{U}} = eig_p\left[\frac{1}{M}\sum_{i=1}^{M}\boldsymbol{U}_i\boldsymbol{U}_i^H\right]$, where $eig_p$ ($\boldsymbol{A}$) denotes the matrix formed by the $p$ dominant eigenvectors of $\boldsymbol{A}$. Using this distance metric and mean, one can apply the standard K-means algorithm to the dominant eigenspaces of the set of channel matrices $\boldsymbol{H}_i$, $i = 1 \ldots, N$.

The output of such an approach is a set of $L$ cluster centers $\overline{\boldsymbol{H}}_l$, $l = 1 \ldots, L$. A channel matrix $\boldsymbol{H}$ belongs to cluster $l$ if $l = arg\min_{k=1,\ldots,L} d(\boldsymbol{H}, \overline{\boldsymbol{H}}_k)$, i.e., if it is closest to cluster center $l$ as measured by $d$.

At operation 64, each of the detection algorithms (such as the algorithms 52, 54 and 56) is trained using the sets of data allocated to the respective cluster in the operation 63. As discussed in detail below, the training operation 64 may be implemented by minimising a loss function. Thus, each detection algorithm is trained using the channel matrices, transmit vector and receive vectors of the datasets associated with that detection algorithm (according to the clustering algorithm). Thus, each set of trainable parameters (as initialised in the operation 61) is trained using part of the dataset obtained in operation 62, in accordance with the clustering performed in operation 63.

The clustering operation 63 may be implemented in a number of different ways, one option being the use of a neural network to perform the allocation. In one embodiment, the classification of channel matrices could also be performed by a neural network.

By way of example, FIG. 7 is a block diagram of system, indicated generally by the reference numeral 70, in accordance with an example embodiment. The system 70 may be used to implement the operation 63 described above. The system 70 is a convolutional neural network-based classifier with L classes. The system 70 comprises a convolutional layers module 71, dense layers module 72, a softmax output activation module 73 and an argmax module 74. The system 70 receives the channel matrix **H** and provides a cluster index *l*.

FIG. 8 is a flow chart showing an algorithm, indicated generally by the reference numeral 80, in accordance with an example embodiment.

At operation 81, a receive vector is obtained (e.g. received, identified, retrieved or otherwise obtained), wherein the receive vector is a vector at an output of a transmission channel, wherein the transmission channel is described by a channel matrix.

At operation 82, a channel matrix or an estimation or approximation of said channel matrix is obtained (e.g. received, identified, retrieved or otherwise obtained).

At operation 83, an algorithm is used to associate the channel matrix with one of a plurality of clusters. The channel matrix may be associated with the cluster of the plurality of clusters that it is closest to the channel matrix, according to a distance metric (e.g. a chordal distance between matrices). Each cluster of the plurality of clusters may have a cluster centre, wherein the means for associating the channel matrix associated the channel matrix with the cluster having the cluster centre closest to the channel matrix of said set of data, according to said distance metric.

Finally, at operation 84, the receive vector and the channel matrix obtained in operations 81 and 82 are provided as inputs to a detection algorithm (such as a MIMO detection algorithm) of the associated cluster in order to obtain an estimated transmit vector (which transmit vector may, for example, be a constellation point of a transmission scheme, such as QAM, as discussed above). The detection algorithm may be one of the algorithms 52, 54 and 56 trained using the algorithm 60 described above. The detection algorithm may be implemented using a neural network.

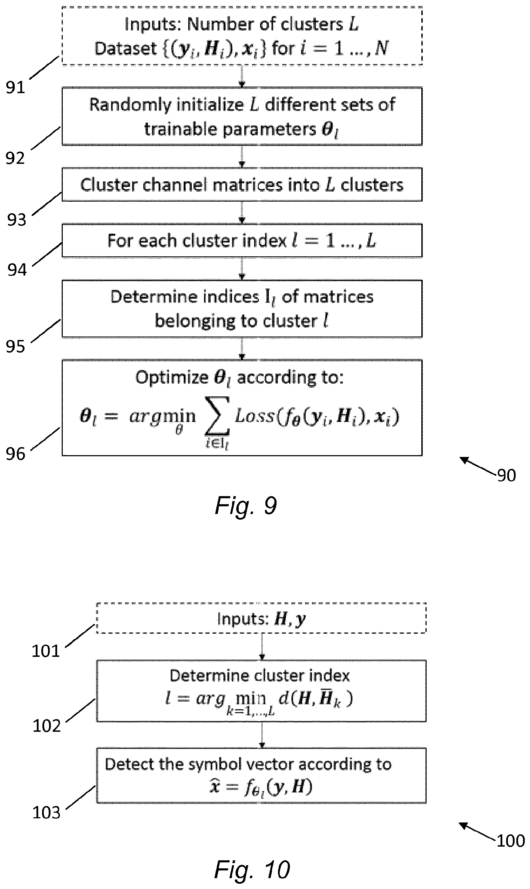

FIG. 9 is a flow chart showing an algorithm, indicated generally by the reference numeral 90, in accordance with an example embodiment. The algorithm 90 has a number of similarities with the algorithm 60 described above.

At operation 91, a number of clusters $L > 1$ is chosen and a dataset $\{(\mathbf{y}_i, \mathbf{H}_i), \mathbf{x}_i\}$ for $i = 1 ..., N$ is obtained. The number of clusters may be predefined, may be a user-definable parameters, or may be set in some other way. For example, an algorithm (such as a neural network-based algorithm) may be provided that seeks to define an optimum number of clusters for a particular set of data.

At operation 92, $L$ different sets of trainable parameters $\theta_l$, $l = 1 ..., L$ are randomly initialised.

At operation 93, the channel matrices $\mathbf{H}_i$ are clustered into $L$ clusters according to a distance metric d and a clustering algorithm. The outcome of this step is a set of $L$ cluster centers $\overline{\mathbf{H}}_l$, $l = 1 ..., L$. A channel matrix $\mathbf{H}$ belongs to cluster $l$ if $l = arg \min_{k=1,...,L} d(\mathbf{H}, \overline{\mathbf{H}}_k)$, i.e., if it is closest to cluster center $l$ as measured by $d$.

At operation 94, for $l = 1 ..., L$, all matrices $\mathbf{H}_i$ in the dataset belonging to cluster $l$ are determined. These are denoted by the set of indices $\mathrm{I}_l$. The allocation of sets of data to clusters may be performed according to a clustering algorithm (such as a K-Means clustering algorithm). As described above, each set of data may be allocated to the cluster of the plurality of clusters that it is closest to the channel matrix of said set of data, according to a distance metric. In one example implementation, each cluster has a cluster centre, wherein a set of data belongs to the cluster having the cluster centre closest to the channel matrix of said set of data, according to said distance metric.

At operation 95, the trainable parameters $\theta_l$ are optimised according to:

$$\boldsymbol{\theta}_l = arg\min_\theta \sum_{i \in \mathrm{I}_l} Loss(f_\theta(\mathbf{y}_i, \mathbf{H}_i), \mathbf{x}_i)$$

where *Loss* is a loss function that measures the error between the output of the detection algorithm and the desired target output.

In many cases, the optimization in operation 95 cannot be carried out exactly, but one can compute an approximation, e.g., through gradient descent or a variant thereof. The loss function could be, e.g., the mean-squared error, the categorical cross-entropy, symbol error rate.

In an example embodiment, the clustering operation (operation 93) is replaced by training a neural network to classify the channel matrices.

FIG. 10 is a flow chart showing an algorithm, indicated generally by the reference numeral 100, in accordance with an example embodiment. The algorithm 100 has a number of similarities with the algorithm 80 described above.

At operation 101, a channel matrix $\mathbf{H}$ is obtained, together with a channel output $\mathbf{y}$.

At operation 102, a cluster index $l$ is determined (so that the cluster index to which the obtained channel matrix $\mathbf{H}$ belongs is determined). This is given by:

$$l = arg \min_{k=1,...,L} d(\mathbf{H}, \overline{\mathbf{H}}_k).$$

At operation 103, the symbol vector is detected according to: $\hat{\mathbf{x}} = f_{\theta_l}(\mathbf{y}, \mathbf{H})$

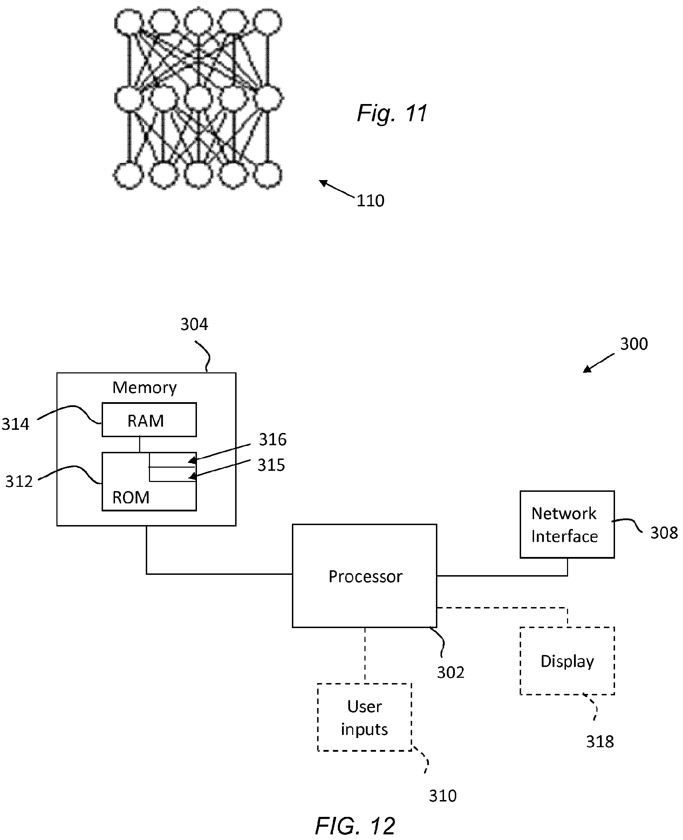

Neural network technology may be used in a number of implementations described herein. FIG. 11 shows an example neural network 110 that may be used in one or more example embodiments. The neural network 110 comprises a plurality of interconnected nodes arranged in a plurality of layers. A neural network, such as the network 110, can be trained by adjusting the connections between nodes and the relative weights of those connections. As noted above, the transmitter and receiver algorithms may be implemented using one of more neural networks, such as a neural network having the form of the neural network 110.

For completeness, FIG. 12 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 30, 60, 80, 90 and 100 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof.

The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

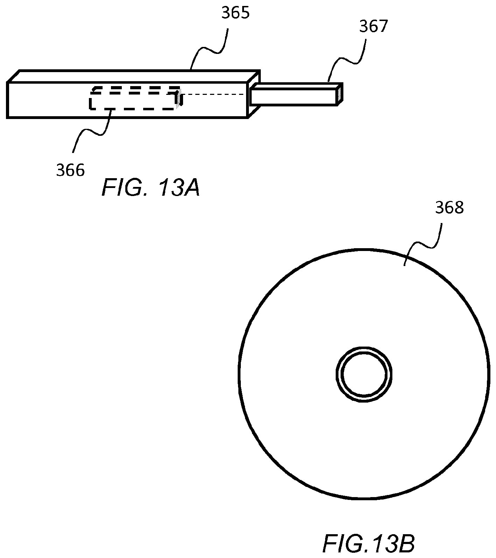

FIGs. 13A and 13B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

It will be appreciated that the above described example embodiments are purely illustrative and are not limiting on the scope of the invention. Other variations and modifications will be apparent to persons skilled in the art upon reading the present specification, without departing from the scope of the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising:

    means for initialising (61) a plurality of sets of trainable parameters, one set of trainable parameters being initialised for each of a plurality of detection algorithms, wherein the plurality of detection algorithms comprise a plurality of versions of a detection algorithm, each having a different set of parameters, and wherein the detection algorithms are multiple-input multiple-output (MIMO) detection algorithms;
    means for obtaining (62) a dataset comprising a plurality of sets of data, each set of data comprising a transmit vector, a receive vector and a channel matrix describing a channel, wherein each transmit vector is a constellation point of a transmission scheme and each detection algorithm generates a transmit vector estimate;
    means for allocating (63) each of the sets of data to one of a plurality of clusters based on the channel matrix of the respective set of data, wherein each cluster is associated with one of said detection algorithms, wherein the allocation is performed according to a clustering algorithm; and
    means for training (64) the trainable parameters of each detection algorithm using the sets of data allocated to the respective cluster.

2. An apparatus as claimed in claim 1, further comprising means for setting a number of clusters in the plurality of clusters.

3. An apparatus as claimed in claim 1 or claim 2, wherein the allocation is performed according to the clustering algorithm such that each set of data is allocated to the cluster of the plurality of clusters that it is closest to the channel matrix of said set of data, according to a distance metric, and, optionally, wherein each cluster has a cluster centre, wherein a set of data belongs to the cluster having the cluster centre closest to the channel matrix of said set of data, according to said distance metric.

**4.** An apparatus as claimed in any one of the preceding claims, wherein the trainable parameters are trained by minimising a loss function and/or the means for allocation said sets of data comprises a neural network (110).

**5.** An apparatus comprising:

means for obtaining a receive vector, wherein the receive vector is a vector at an output of a transmission channel, wherein the transmission channel is described by a channel matrix;

means for obtaining said channel matrix or an estimation or approximation of said channel matrix;

means for associating the channel matrix with one of a plurality of clusters according to a clustering algorithm; and

means for providing the channel matrix and the receive vector as inputs to a detection algorithm of the associated cluster in order to obtain an estimated transmit vector, wherein:

the detection algorithm of the cluster is one of a plurality of detection algorithms each comprising a version a detection algorithm, each version having a different set of parameters, wherein the detection algorithms are multiple-input multiple-output (MIMO) detection algorithms;

each transmit vector is a constellation point of a transmission scheme; and

each detection algorithm generates a transmit vector estimate.

**6.** An apparatus as claimed in claim 5, wherein the channel matrix is associated with the cluster of the plurality of clusters that it is closest to the channel matrix, according to a distance metric, and, optionally, wherein each cluster of the plurality of clusters has a cluster centre, wherein the means for associating the channel matrix associates the channel matrix with the cluster having the cluster centre closest to the channel matrix of said set of data, according to said distance metric.

**7.** An apparatus as claimed in claim 5 or claim 6, wherein the detection algorithm is implemented using a neural network (110).

**8.** An apparatus as claimed in any one of the claims 5 to 7, wherein the clustering algorithm comprises a K-means algorithm.

**9.** A computer-implemented method comprising:

initialising a plurality of sets of trainable parameters, one set of trainable parameters being initialised for each of a plurality of detection algorithms, wherein the plurality of detection algorithms comprise a plurality of versions of a detection algorithm, each having a different set of parameters, and wherein the detection algorithms are multiple-input multiple-output (MIMO) detection algorithms;

obtaining a dataset comprising a plurality of sets of data, each set of data comprising a transmit vector, a receive vector and a channel matrix describing a channel, wherein each transmit vector is a constellation point of a transmission scheme and each detection algorithm generates a transmit vector estimate;

allocating each of the sets of data to one of a plurality of clusters based on the channel matrix of the respective set of data, wherein each cluster is associated with one of said detection algorithms, wherein the allocation is performed according to a clustering algorithm; and

training the trainable parameters of each detection algorithm using the sets of data allocated to the respective cluster.

**10.** A computer-implemented method comprising:

obtaining a receive vector, wherein the receive vector is a vector at an output of a transmission channel, wherein the transmission channel is described by a channel matrix;

obtaining said channel matrix or an estimation or approximation of said channel matrix;

associating the channel matrix with one of a plurality of clusters according to a clustering algorithm; and

providing the channel matrix and the receive vector as inputs to a detection algorithm of the associated cluster in order to obtain an estimated transmit vector, wherein:

the detection algorithm of the cluster is one of a plurality of detection algorithms each comprising a version a detection algorithm, each version having a different set of parameters, wherein the detection algorithms are multiple-input multiple-output (MIMO) detection algorithms;

each transmit vector is a constellation point of a transmission scheme; and

each detection algorithm generates a transmit vector estimate.

**11.** A computer program comprising instructions for causing an apparatus to perform at least the following:

initialising a plurality of sets of trainable parameters, one set of trainable parameters being initialised for each of a plurality of detection algorithms, wherein the plurality of detection algorithms comprise a plurality of versions of a detection algorithm, each having a different set of parameters, and wherein the detection algorithms are multiple-input multiple-output (MIMO) detection algorithms;

obtaining a dataset comprising a plurality of sets of data, each set of data comprising a transmit vector, a receive vector and a channel matrix describing a channel, wherein each transmit vector is a constellation point of a transmission scheme and each detection algorithm generates a transmit vector estimate;

allocating each of the sets of data to one of a plurality of clusters based on the channel matrix of the respective set of data, wherein each cluster is associated with one of said detection algorithms, wherein the allocation is performed according to a clustering algorithm; and

training the trainable parameters of each detection algorithm using the sets of data allocated to the respective cluster.

12. A computer program comprising instructions for causing an apparatus to perform at least the following:

obtaining a receive vector, wherein the receive vector is a vector at an output of a transmission channel, wherein the transmission channel is described by a channel matrix;

obtaining said channel matrix or an estimation or approximation of said channel matrix;

associating the channel matrix with one of a plurality of clusters according to a clustering algorithm; and

providing the channel matrix and the receive vector as inputs to a detection algorithm of the associated cluster in order to obtain an estimated transmit vector, wherein:

the detection algorithm of the cluster is one of a plurality of detection algorithms each comprising a version a detection algorithm, each version having a different set of parameters, wherein the detection algorithms are multiple-input multiple-output (MIMO) detection algorithms;

each transmit vector is a constellation point of a transmission scheme; and

each detection algorithm generates a transmit vector estimate.

**Patentansprüche**

1. Eine Vorrichtung, umfassend:

Mittel zum Initialisieren (61) einer Vielzahl von Sätzen trainierbarer Parameter, wobei ein Satz trainierbarer Parameter für jeden einer Vielzahl von Detektionsalgorithmen initialisiert wird, wobei die Vielzahl von Detektionsalgorithmen eine Vielzahl von Versionen eines Detektionsalgorithmus umfasst, wobei jede Version einen unterschiedlichen Satz von Parametern aufweist, und wobei die Detektionsalgorithmen Detektionsalgorithmen mit mehreren Eingängen und mehreren Ausgängen (MIMO) sind;

Mittel zum Erhalten (62) eines Datensatzes, der eine Vielzahl von Datensätzen umfasst, wobei jeder Datensatz einen Sendevektor, einen Empfangsvektor und eine einen Kanal beschreibende Kanalmatrix umfasst, wobei jeder Sendevektor ein Konstellationspunkt eines Übertragungsschemas ist und jeder Detektionsalgorithmus eine Sendevektorschätzung erzeugt;

Mittel zum Zuordnen (63) jedes der Datensätze zu einem einer Vielzahl von Clustern auf der Grundlage der Kanalmatrix des jeweiligen Datensatzes, wobei jeder Cluster einem der genannten Detektionsalgorithmen zugeordnet ist, wobei die Zuordnung gemäß einem Clustering-Algorithmus durchgeführt wird; und

Mittel zum Trainieren (64) der trainierbaren Parameter jedes Detektionsalgorithmus unter Verwendung der dem jeweiligen Cluster zugeordneten Datensätze.

2. Eine Vorrichtung nach Anspruch 1, ferner umfassend Mittel zum Festlegen einer Anzahl von Clustern in der Vielzahl von Clustern.

3. Eine Vorrichtung nach Anspruch 1 oder Anspruch 2, wobei die Zuordnung gemäß dem Clustering-Algorithmus derart durchgeführt wird, dass jeder Datensatz dem Cluster der Vielzahl von Clustern zugeordnet wird, der der Kanalmatrix des genannten Datensatzes am nächsten ist, gemäß einer Abstandsmetrik, und wobei, optional, jeder Cluster ein Clusterzentrum aufweist, wobei ein Datensatz dem Cluster angehört, dessen Clusterzentrum der Kanalmatrix des genannten Datensatzes am nächsten ist, gemäß der genannten Abstandsmetrik.

4. Eine Vorrichtung nach einem der vorhergehenden Ansprüche, wobei die trainierbaren Parameter durch Minimierung einer Verlustfunktion trainiert werden und/oder die Mittel zum Zuordnen der genannten Datensätze ein neuronales Netz (110) umfassen.

5. Eine Vorrichtung, umfassend:

Mittel zum Erhalten eines Empfangsvektors, wobei der Empfangsvektor ein Vektor an einem Ausgang eines Übertragungskanals ist, wobei der Übertragungskanal durch eine Kanalmatrix beschrieben wird;

Mittel zum Erhalten der genannten Kanalmatrix oder einer Schätzung oder Approximation der genannten Kanalmatrix;

Mittel zum Zuordnen der Kanalmatrix zu einem einer Vielzahl von Clustern gemäß einem Clustering-Algorithmus; und

Mittel zum Bereitstellen der Kanalmatrix und des Empfangsvektors als Eingaben an einen Detektionsalgorithmus des zugeordneten Clusters, um einen geschätzten Sendevektor zu erhalten, wobei:

der Detektionsalgorithmus des Clusters einer einer Vielzahl von Detektionsalgorithmen ist, die jeweils eine Version eines Detektionsalgorithmus umfassen, wobei jede Version einen unterschiedlichen Satz von Parametern aufweist, wobei die Detektionsalgorithmen Detektionsalgorithmen mit mehreren Eingängen und mehreren Ausgängen (MIMO) sind;

jeder Sendevektor ein Konstellationspunkt eines Übertragungsschemas ist; und

jeder Detektionsalgorithmus eine Sendevektorschätzung erzeugt.

6. Eine Vorrichtung nach Anspruch 5, wobei die Kanalmatrix dem Cluster der Vielzahl von Clustern zugeordnet wird, der der Kanalmatrix am nächsten ist, gemäß einer Abstandsmetrik, und wobei, optional, jeder Cluster der Vielzahl von Clustern ein Clusterzentrum aufweist, wobei die Mittel zum Zuordnen der Kanalmatrix die Kanalmatrix dem Cluster zuordnen, dessen Clusterzentrum der Kanalmatrix des genannten Datensatzes am nächsten ist, gemäß der genannten Abstandsmetrik.

7. Eine Vorrichtung nach Anspruch 5 oder Anspruch 6, wobei der Detektionsalgorithmus mittels eines neuronalen Netzes (110) implementiert ist.

8. Eine Vorrichtung nach einem der Ansprüche 5 bis 7, wobei der Clustering-Algorithmus einen K-Means-Algorithmus umfasst.

9. Ein computerimplementiertes Verfahren, umfassend:

Initialisieren einer Vielzahl von Sätzen trainierbarer Parameter, wobei ein Satz trainierbarer Parameter für jeden einer Vielzahl von Detektionsalgorithmen initialisiert wird, wobei die Vielzahl von Detektionsalgorithmen eine Vielzahl von Versionen eines Detektionsalgorithmus umfasst, wobei jede Version einen unterschiedlichen Satz von Parametern aufweist, und wobei die Detektionsalgorithmen Detektionsalgorithmen mit mehreren Eingängen und mehreren Ausgängen (MIMO) sind;

Erhalten eines Datensatzes, der eine Vielzahl von Datensätzen umfasst, wobei jeder Datensatz einen Sendevektor, einen Empfangsvektor und eine einen Kanal beschreibende Kanalmatrix umfasst, wobei jeder Sendevektor ein Konstellationspunkt eines Übertragungsschemas ist und jeder Detektionsalgorithmus eine Sendevektorschätzung erzeugt;

Zuordnen jedes der Datensätze zu einem einer Vielzahl von Clustern auf der Grundlage der Kanalmatrix des jeweiligen Datensatzes, wobei jeder Cluster einem der genannten Detektionsalgorithmen zugeordnet ist, wobei die Zuordnung gemäß einem Clustering-Algorithmus durchgeführt wird; und

Trainieren der trainierbaren Parameter jedes Detektionsalgorithmus unter Verwendung der dem jeweiligen Cluster zugeordneten Datensätze.

10. Ein computerimplementiertes Verfahren, umfassend:

Erhalten eines Empfangsvektors, wobei der Empfangsvektor ein Vektor an einem Ausgang eines Übertragungskanals ist, wobei der Übertragungskanal durch eine Kanalmatrix beschrieben wird;

Erhalten der genannten Kanalmatrix oder einer Schätzung oder Approximation der genannten Kanalmatrix;

Zuordnen der Kanalmatrix zu einem einer Vielzahl von Clustern gemäß einem Clustering-Algorithmus; und

Bereitstellen der Kanalmatrix und des Empfangsvektors als Eingaben an einen Detektionsalgorithmus des zugeordneten Clusters, um einen geschätzten Sendevektor zu erhalten, wobei:

der Detektionsalgorithmus des Clusters einer einer Vielzahl von Detektionsalgorithmen ist, die jeweils eine Version eines Detektionsalgorithmus umfassen, wobei jede Version einen unterschiedlichen Satz von Parametern aufweist, wobei die Detektionsalgorithmen Detektionsalgorithmen mit mehreren Eingängen und mehreren Ausgängen (MIMO) sind;

jeder Sendevektor ein Konstellationspunkt eines Übertragungsschemas ist; und

jeder Detektionsalgorithmus eine Sendevektorschätzung erzeugt.

11. Ein Computerprogramm, umfassend Anweisungen, um eine Vorrichtung zu veranlassen, zumindest Folgendes auszuführen:

Initialisieren einer Vielzahl von Sätzen trainierbarer Parameter, wobei ein Satz trainierbarer Parameter für jeden einer Vielzahl von Detektionsalgorithmen initialisiert wird, wobei die Vielzahl von Detektionsalgorithmen eine Vielzahl von Versionen eines Detektionsalgorithmus umfasst, wobei jede Version einen unterschiedlichen Satz von Parametern aufweist, und wobei die Detektionsalgorithmen Detektionsalgorithmen mit mehreren Eingängen und mehreren Ausgängen (MIMO) sind;

Erhalten eines Datensatzes, der eine Vielzahl von Datensätzen umfasst, wobei jeder Datensatz einen Sendevektor, einen Empfangsvektor und eine einen Kanal beschreibende Kanalmatrix umfasst, wobei jeder Sendevektor ein Konstellationspunkt eines Übertragungsschemas ist und jeder Detektionsalgorithmus eine Sendevektorschätzung erzeugt;

Zuordnen jedes der Datensätze zu einem einer Vielzahl von Clustern auf der Grundlage der Kanalmatrix des jeweiligen Datensatzes, wobei jeder Cluster einem der genannten Detektionsalgorithmen zugeordnet ist, wobei die Zuordnung gemäß einem Clustering-Algorithmus durchgeführt wird; und

Trainieren der trainierbaren Parameter jedes Detektionsalgorithmus unter Verwendung der dem jeweiligen Cluster zugeordneten Datensätze.

12. Ein Computerprogramm, umfassend Anweisungen, um eine Vorrichtung zu veranlassen, zumindest Folgendes auszuführen:

Erhalten eines Empfangsvektors, wobei der Empfangsvektor ein Vektor an einem Ausgang eines Übertragungskanals ist, wobei der Übertragungskanal durch eine Kanalmatrix beschrieben wird;

Erhalten der genannten Kanalmatrix oder einer Schätzung oder Approximation der genannten Kanalmatrix;

Zuordnen der Kanalmatrix zu einem einer Vielzahl von Clustern gemäß einem Clustering-Algorithmus; und

Bereitstellen der Kanalmatrix und des Empfangsvektors als Eingaben an einen Detektionsalgorithmus des zugeordneten Clusters, um einen geschätzten Sendevektor zu erhalten, wobei:

der Detektionsalgorithmus des Clusters einer einer Vielzahl von Detektionsalgorithmen ist, die jeweils eine Version eines Detektionsalgorithmus umfassen, wobei jede Version einen unterschiedlichen Satz von Parametern aufweist, wobei die Detektionsalgorithmen Detektionsalgorithmen mit mehreren Eingängen und mehreren Ausgängen (MIMO) sind;

jeder Sendevektor ein Konstellationspunkt eines Übertragungsschemas ist; und

jeder Detektionsalgorithmus eine Sendevektorschätzung erzeugt.

## Revendications

1. Un appareil comprenant :

des moyens pour initialiser (61) une pluralité d'ensembles de paramètres entraînables, un ensemble de paramètres entraînables étant initialisé pour chacun d'une pluralité d'algorithmes de détection, dans lequel la pluralité d'algorithmes de détection comprend une pluralité de versions d'un algorithme de détection, chaque version ayant un ensemble différent de paramètres, et dans lequel les algorithmes de détection sont des algorithmes de détection à entrées multiples et sorties multiples (MIMO) ;

des moyens pour obtenir (62) un jeu de données comprenant une pluralité d'ensembles de données, chaque ensemble de données comprenant un vecteur d'émission, un vecteur de réception et une matrice de canal décrivant un canal, dans lequel chaque vecteur d'émission est un point de constellation d'un schéma de transmission et chaque algorithme de détection génère une estimation de vecteur d'émission ;

des moyens pour attribuer (63) chacun des ensembles de données à l'un d'une pluralité de groupes sur la base de la matrice de canal de l'ensemble de données respectif, dans lequel chaque groupe est associé à l'un desdits algorithmes de détection, dans lequel l'attribution est effectuée selon un algorithme de regroupement ; et

des moyens pour entraîner (64) les paramètres entraînables de chaque algorithme de détection en utilisant les ensembles de données attribués au groupe respectif.

2. Un appareil selon la revendication 1, comprenant en outre des moyens pour définir un nombre de groupes dans la pluralité de groupes.

3. Un appareil selon la revendication 1 ou la revendication 2, dans lequel l'attribution est effectuée selon l'algorithme de regroupement de telle sorte que chaque ensemble de données est attribué au groupe de la pluralité de groupes qui est le plus proche de la matrice de canal dudit ensemble de données, selon une métrique de distance, et, facultativement, dans lequel chaque groupe a un centre de groupe, dans lequel un ensemble de données appartient au groupe ayant le centre de groupe le plus proche de la matrice de canal dudit ensemble de données, selon ladite métrique de distance.

4. Un appareil selon l'une quelconque des revendications précédentes, dans lequel les paramètres entraînables sont entraînés par minimisation d'une fonction de perte et/ou les moyens pour attribuer lesdits ensembles de données comprennent un réseau neuronal (110).

5. Un appareil comprenant :

des moyens pour obtenir un vecteur de réception, dans lequel le vecteur de réception est un vecteur en sortie d'un canal de transmission, dans lequel le canal de transmission est décrit par une matrice de canal ;
des moyens pour obtenir ladite matrice de canal ou une estimation ou approximation de ladite matrice de canal ;
des moyens pour associer la matrice de canal à l'un d'une pluralité de groupes selon un algorithme de regroupement ; et
des moyens pour fournir la matrice de canal et le vecteur de réception en tant qu'entrées à un algorithme de détection du groupe associé afin d'obtenir un vecteur d'émission estimé, dans lequel :

l'algorithme de détection du groupe est l'un d'une pluralité d'algorithmes de détection comprenant chacun une version d'un algorithme de détection, chaque version ayant un ensemble différent de paramètres, dans lequel les algorithmes de détection sont des algorithmes de détection à entrées multiples et sorties multiples (MIMO) ;
chaque vecteur d'émission est un point de constellation d'un schéma de transmission ; et
chaque algorithme de détection génère une estimation de vecteur d'émission.

6. Un appareil selon la revendication 5, dans lequel la matrice de canal est associée au groupe de la pluralité de groupes qui est le plus proche de la matrice de canal, selon une métrique de distance, et, facultativement, dans lequel chaque groupe de la pluralité de groupes a un centre de groupe, dans lequel les moyens pour associer la matrice de canal associent la matrice de canal au groupe ayant le centre de groupe le plus proche de la matrice de canal dudit ensemble de données, selon ladite métrique de distance.

7. Un appareil selon la revendication 5 ou la revendication 6, dans lequel l'algorithme de détection est mis en œuvre au moyen d'un réseau neuronal (110).

8. Un appareil selon l'une quelconque des revendications 5 à 7, dans lequel l'algorithme de regroupement comprend un algorithme K-means.

9. Un procédé mis en œuvre par ordinateur comprenant :

l'initialisation d'une pluralité d'ensembles de paramètres entraînables, un ensemble de paramètres entraînables étant initialisé pour chacun d'une pluralité d'algorithmes de détection, dans lequel la pluralité d'algorithmes de détection comprend une pluralité de versions d'un algorithme de détection, chaque version ayant un ensemble différent de paramètres, et dans lequel les algorithmes de détection sont des algorithmes de détection à entrées multiples et sorties multiples (MIMO) ;
l'obtention d'un jeu de données comprenant une pluralité d'ensembles de données, chaque ensemble de données comprenant un vecteur d'émission, un vecteur de réception et une matrice de canal décrivant un canal, dans lequel chaque vecteur d'émission est un point de constellation d'un schéma de transmission et chaque algorithme de détection génère une estimation de vecteur d'émission ;
l'attribution de chacun des ensembles de données à l'un d'une pluralité de groupes sur la base de la matrice de canal de l'ensemble de données respectif, dans lequel chaque groupe est associé à l'un desdits algorithmes de détection, dans lequel l'attribution est effectuée selon un algorithme de regroupement ; et
l'entraînement des paramètres entraînables de chaque algorithme de détection en utilisant les ensembles de données attribués au groupe respectif.

10. Un procédé mis en œuvre par ordinateur comprenant :

l'obtention d'un vecteur de réception, dans lequel le vecteur de réception est un vecteur en sortie d'un canal de transmission, dans lequel le canal de transmission est décrit par une matrice de canal ;
l'obtention de ladite matrice de canal ou d'une estimation ou approximation de ladite matrice de canal ;
l'association de la matrice de canal à l'un d'une pluralité de groupes selon un algorithme de regroupement ; et

la fourniture de la matrice de canal et du vecteur de réception en tant qu'entrées à un algorithme de détection du groupe associé afin d'obtenir un vecteur d'émission estimé, dans lequel :

l'algorithme de détection du groupe est l'un d'une pluralité d'algorithmes de détection comprenant chacun une version d'un algorithme de détection, chaque version ayant un ensemble différent de paramètres, dans lequel les algorithmes de détection sont des algorithmes de détection à entrées multiples et sorties multiples (MIMO) ;

chaque vecteur d'émission est un point de constellation d'un schéma de transmission ; et

chaque algorithme de détection génère une estimation de vecteur d'émission.

11. Un programme d'ordinateur comprenant des instructions pour amener un appareil à exécuter au moins ce qui suit :

l'initialisation d'une pluralité d'ensembles de paramètres entraînables, un ensemble de paramètres entraînables étant initialisé pour chacun d'une pluralité d'algorithmes de détection, dans lequel la pluralité d'algorithmes de détection comprend une pluralité de versions d'un algorithme de détection, chaque version ayant un ensemble différent de paramètres, et dans lequel les algorithmes de détection sont des algorithmes de détection à entrées multiples et sorties multiples (MIMO) ;

l'obtention d'un jeu de données comprenant une pluralité d'ensembles de données, chaque ensemble de données comprenant un vecteur d'émission, un vecteur de réception et une matrice de canal décrivant un canal, dans lequel chaque vecteur d'émission est un point de constellation d'un schéma de transmission et chaque algorithme de détection génère une estimation de vecteur d'émission ;

l'attribution de chacun des ensembles de données à l'un d'une pluralité de groupes sur la base de la matrice de canal de l'ensemble de données respectif, dans lequel chaque groupe est associé à l'un desdits algorithmes de détection, dans lequel l'attribution est effectuée selon un algorithme de regroupement ; et

l'entraînement des paramètres entraînables de chaque algorithme de détection en utilisant les ensembles de données attribués au groupe respectif.

12. Un programme d'ordinateur comprenant des instructions pour amener un appareil à exécuter au moins ce qui suit :

l'obtention d'un vecteur de réception, dans lequel le vecteur de réception est un vecteur en sortie d'un canal de transmission, dans lequel le canal de transmission est décrit par une matrice de canal ;

l'obtention de ladite matrice de canal ou d'une estimation ou approximation de ladite matrice de canal ;

l'association de la matrice de canal à l'un d'une pluralité de groupes selon un algorithme de regroupement ; et

la fourniture de la matrice de canal et du vecteur de réception en tant qu'entrées à un algorithme de détection du groupe associé afin d'obtenir un vecteur d'émission estimé, dans lequel :

l'algorithme de détection du groupe est l'un d'une pluralité d'algorithmes de détection comprenant chacun une version d'un algorithme de détection, chaque version ayant un ensemble différent de paramètres, dans lequel les algorithmes de détection sont des algorithmes de détection à entrées multiples et sorties multiples (MIMO) ;

chaque vecteur d'émission est un point de constellation d'un schéma de transmission ; et

chaque algorithme de détection génère une estimation de vecteur d'émission.

*Fig. 1*

*Fig. 2*

Obtain
receive vector

32

Estimate transmit
vector

34

30

*Fig. 3*

*H*

*y*

*x*

40

*Fig. 4*

$y, H_1$    $f_1(y, H_1)$    $x$

52

$y, H_2$    $f_2(y, H_2)$    $x$

54

$y, H_L$    $f_l(y, H_L)$    $x$

56

50

*Fig. 5*

| Initialise trainable parameters |
| :---: |

61

↓

| Obtain dataset |
| :---: |

62

↓

| Allocate sets of data to clusters |
| :---: |

63

↓

| Train detection algorithms |
| :---: |

64

*Fig. 6*

60

| Obtain receive vector |
| :---: |

81

↓

| Obtain channel matrix |
| :---: |

82

↓

| Identify cluster |
| :---: |

83

↓

| Detection |
| :---: |

84

*Fig. 8*

80

$H$ → | Convolutional layers | → | Dense layers layers | → | Softmax with $L$ outputs | → | argmax | → Cluster index $l$

71   72   73   74   70

*Fig. 7*

Inputs: Number of clusters $L$
Dataset $\{(\boldsymbol{y}_i, \boldsymbol{H}_i), \boldsymbol{x}_i\}$ for $i = 1 \dots, N$

91

Randomly initialize $L$ different sets of
trainable parameters $\boldsymbol{\theta}_l$

92

Cluster channel matrices into $L$ clusters

93

For each cluster index $l = 1 \dots, L$

94

Determine indices $I_l$ of matrices
belonging to cluster $l$

95

Optimize $\boldsymbol{\theta}_l$ according to:

$$\boldsymbol{\theta}_l = arg\min_{\theta} \sum_{i \in I_l} Loss(f_{\boldsymbol{\theta}}(\boldsymbol{y}_i, \boldsymbol{H}_i), \boldsymbol{x}_i)$$

96

90

*Fig. 9*

Inputs: $\boldsymbol{H}, \boldsymbol{y}$

101

Determine cluster index
$$l = arg\min_{k=1,\dots,L} d(\boldsymbol{H}, \overline{\boldsymbol{H}}_k)$$

102

Detect the symbol vector according to
$$\widehat{\boldsymbol{x}} = f_{\boldsymbol{\theta}_l}(\boldsymbol{y}, \boldsymbol{H})$$

103

100

*Fig. 10*

*Fig. 11*

110

*FIG. 12*

FIG. 13A

FIG.13B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2019029802 A

**Non-patent literature cited in the description**

• **BAGADI LAKA PRAVEEN**. Recent trends in multiuser detection techniques for SDMA-OFDM communication system. *Physical Communication*, 27 July 2016, vol. 20